# EUROPÄISCHE PATENTSCHRIFT

(11) **EP 1 456 622 B1**
(45) Veröffentlichungstag und Bekanntmachung des Hinweises auf die Patenterteilung: **17.04.2013**
(21) Anmeldenummer: 02790482.0
(22) Anmeldetag: 11.12.2002
(51) Int. Cl.: G01N 1/31

(54) **BEHANDLUNGSKAMMER FÜR DIE BEHANDLUNG VON HISTOLOGISCHEN PROBEN**
TREATMENT COMPARTMENT FOR TREATING HISTOLOGICAL SAMPLES
CHAMBRE DE TRAITEMENT POUR ECHANTILLONS HISTOLOGIQUES

(30) Priorität: 21.12.2001 DE 10163487
(43) Veröffentlichungstag der Anmeldung: 15.09.2004
(73) Patentinhaber: Microm International GmbH, 69190 Walldorf (DE)
(72) Erfinder: IZVOZTCHIKOV, Ilia, Borisovitch, St. Petersburg, 194223 (RU); EBELING, Helge, 67595 Bechtheim (DE)
(74) Vertreter: Lasch, Hartmut
(86) Internationale Anmeldenummer: PCT/EP2002/014040
(87) Internationale Veröffentlichungsnummer: WO 2003/054520

(56) Entgegenhaltungen:
- EP-A- 0 856 729
- EP-A- 0 969 277
- WO-A-96/29866
- US-A- 3 435 835
- US-A- 4 353 381
- US-A- 4 358 470
- US-A- 4 576 796
- US-A- 5 316 945
- DATABASE WPI Section Ch, Week 9809 Derwent Publications Ltd., London, GB; Class B04, AN 1998-099155 XP002240745 & RU 2 083 163 A (TAGANROG COMMUNIC RES. INST.), 7. Oktober 1997 (1997-10-07)

## Beschreibung

Die Erfindung betrifft eine Behandlungskammer für die Behandlung von histologischen Proben mit Behandlungsmitteln gemäß dem Oberbegriff des Anspruchs 1.

Vorrichtungen mit solchen Behandlungskammern dienen der Aufbereitung von histologischen Proben für mikroskopische Untersuchungen, wobei die zur Untersuchung entnommenen Proben einer Reihe von aufeinanderfolgenden Arbeitsschritten unterzogen werden, wie beispielsweise der Fixation, z.B. in einer wässrigen Formaldehydlösung, dem Dehydrieren, dem Clearing und dem Infiltrieren mit Paraffin oder einem anderen geeigneten Wachs. Bei der Dehydrierung werden die fixierten Proben mit einem Alkoholreagens allmählich steigender Konzentration behandelt. Bei dem Clearing werden die dehydrierten Proben ein- oder mehrmals mit einem Clearingsmittel, z.B. Xylol behandelt. Letzteres ist ein Zwischenmedium, das der Entfernung des Alkohols und der nachfolgenden Einbringung von Paraffin dient, da eine unmittelbare Ersetzung des Alkohols durch Paraffin nicht möglich ist. Außerdem wird durch das Clearing eine Kostrastverstärkung erzielt. Für die Infiltration mit Paraffin (oder einem anderen Wachs) werden die dehydrierten und geclearten Proben ebenfalls mehrmals in geschmolzenes Paraffin oder ein anderes geschmolzenes Wachs getaucht. Erst danach ist die histologische Probe zur Bearbeitung mit einem Mikrotom geeignet. Dabei werden Dünnschnitte hergestellt, die in einem Mikroskop untersucht werden können.

Eine Ausgestaltung einer Behandlungskammer ist aus der RU 99 12 63 11 A1 bekannt. Damit eine derartige Behandlungskammer auch ohne Austritt von Behandlungsmittel - es kann sich dabei um eine vorhandene Füllung oder um verbliebene Reste handeln - öffenbar ist, wird dort vorgeschlagen, daß die Behandlungskammer derart schwenkbar ausgebildet ist, daß die Türe für das Öffnen nach oben zeigt. Diese Lösung ist gerätetechnisch aufwendig und die Zugänglichkeit der Behandlungskammer von oben ist nicht optimal.

Aus der US 3,435,835, von der im Oberbegriff des Anspruchs 1 ausgegangen wird, ist eine Behandlungskammer bekannt, bei der Körbe, die mit zu reinigenden Objekten gefüllt sind, in einer Trommel angeordnet werden. Anschließend wird die Tür der Trommel geschlossen und ein flüssiges Behandlungsmittel in die Trommel eingelassen.

Nach Beendigung der Reinigung wird ein Ventil geöffnet, so daß das flüssige Behandlungsmittel aus der Kammer in einen Tank abfließen kann. Die Tür wird erst nach Entleerung der Kammer geöffnet, da ansonsten Flüssigkeit aus der Türöffnung auslaufen würde.

Wenn man so wenig Flüssigkeit in die Kammer einfüllen würde, daß die Flüssigkeit bei geöffneter Tür aufgrund eines umlaufenden Randes des Gehäuses nicht ausläuft, wäre die Menge der in der Kammer verbleibenden Flüssigkeit so gering, daß eine ordnungsgemäße Behandlung der Objekte nicht gewährleistet ist.

Der Erfindung liegt die Aufgabe zugrunde, eine Behandlungskammer derart auszubilden, daß eine gute Behandlung der Proben gewährleistet ist, ohne daß das Behandlungsmittel beim Entnehmen der Proben abgelassen werden muß und ohne daß die Gefahr besteht, daß Behandlungsmittel austritt.

Die Aufgabe wird erfindungsgemäß durch eine Behandlungskammer mit den Merkmalen des Anspruchs 1 gelöst. Dabei ist vorgesehen, daß das Gehäuse derart ausgebildet und gelagert ist sowie mindestens im unteren Bereich der Stirnseite einen derartigen Rand aufweist, daß sich auch bei geöffneter Zugangsöffnung ein Flüssigkeitsspiegel von Behandlungsmitteln bilden kann, und daß die Halteeinrichtung eine derartige Probenanordnung aufweist, daß sich letztere bei einer Drehung durch das den Flüssigkeitsspiegel bildende Behandlungsmittel bewegen kann. Dabei weist der Rand eine Breite auf, die größer ist als die Dicke der Probenanordnung und des Spiels der Haltevorrichtung zur Innenwandung des Gehäuses.

Der Vorteil der Erfindung besteht darin, daß die Behandlungskammer mit einfachen Mitteln dahingehend ausgestaltet wurde, daß sie im Stillstand jederzeit geöffnet werden kann, ohne daß die Gefahr besteht, daß Behandlungsmittel austritt und dies selbst dann, wenn sie eine maximale Füllung mit Behandlungsmittel aufweist. Auf diese Weise ist eine Öffnung der Behandlungskammer zum falschen Zeitpunkt und daher mit Austritt von Behandlungsmitteln nahezu ausgeschlossen und es ist möglich, Proben zu entfernen oder nachzuladen, selbst wenn die Behandlungskammer mit Behandlungsmittel gefüllt ist. Weiterhin ist durch die Öffnung der Behandlungskammer an der nicht in eine waagerechte Lage gekippten Stirnseite (wie beim o.g. Stand der Technik) eine optimale Zugänglichkeit zur Halteeinrichtung für die Proben gegeben, so daß auch dadurch auf einfache Weise ein jederzeitiges Herausnehmen oder Nachladen von Proben beziehungsweise von diese enthaltenden Behältnissen möglich ist. Die Behandlungskammer läßt sich auf verschiedene Weise ausbilden. So ist es möglich, daß das Gehäuse als waagerecht liegender Zylinder und die Halteeinrichtung derart ausgebildet sind, daß sie die Proben auf Kreisbahnen entlang der inneren Zylinderwandung führt, wobei der Rand die Proben, die sich am tiefsten Punkt einer Kreisbahn befinden, überragt.

Eine weitere Ausgestaltungsvariante sieht vor, daß das Gehäuse als Kegelstumpf ausgebildet ist, der derart gelagert ist, daß die unterste Mantellinie horizontal verläuft, daß die Halteeinrichtung derart ausgebildet ist, daß sie die Proben auf Kreisbahnen entlang der inneren Kegelstumpfwandung führt, und daß der Rand sich derart an der großen Kreisfläche des Kegelstumpfes erstreckt, daß er die Proben, die sich an den tiefsten Punkten befinden, überragt.

Die oben genannten Vorteile sind durch beide Ausführungsformen gewährleistet, wobei die Ausgestaltung als Kegelstumpf den zusätzlichen Vorteil aufweist, daß sich die Zugangsöffnung an der großen Kreisfläche befindet, die schräg nach oben weist. Damit entsteht eine große Öffnung mit ergonomisch gesehen bester Ausrichtung für eine optimale Zugänglichkeit zum gesamten Gehäuse.

Vorzugsweise ist vorgesehen, daß in der Halteeinrichtung Kassetten, welche die Probe enthalten, derart anordenbar sind, daß sie sich im wesentlichen entlang der gesamten Innenwand des Gehäuses erstrecken und dabei mit der Halteeinrichtung und deren Spiel zum Gehäuse eine Dicke aufweisen, die geringer als die Breite des Randes ist. Durch diese Ausgestaltung wird erreicht, daß der Flüssigkeitsspiegel im Gehäuse nicht allzu hoch sein muß, um alle Proben, die sich auf der Halteeinrichtung befinden, im Laufe einer Drehung derselben zu benetzen. Auf diese Weise ist der Verbrauch von Behandlungsmittel sehr sparsam und damit optimal ausgestaltet. Am besten wird dies dann erreicht, wenn nur eine Lage von Kassetten vorgesehen ist.

Zweckmäßigerweise ist die Halteeinrichtung für die Aufnahme von Behältnissen ausgebildet, in denen mehrere Kassetten anordenbar sind. Dadurch ist es möglich, diese Behältnisse außerhalb der Behandlungskammer mit den Kassetten zu beschicken und dann die Behältnisse in die Behandluhgskammer einzubringen und mit der Halteeinrichtung zu verbinden.

Bei der Ausgestaltung des Gehäuses als Kegelstumpf besteht ein sehr einfaches und preiswertes Herstellungsverfahren darin, daß dieses durch Formgebung eines einzigen Blechstücks hergestellt ist. Da bei dieser Ausführungsform zweckmäßigerweise die Halteeinrichtung für die Proben oder für Behältnisse, die die Proben enthalten, ebenfalls die Form eines Kegelstumpfes aufweist, kann auch diese durch Formung eines einzigen Blechstücks wirtschaftlich hergestellt werden. Dadurch werden Schweißarbeiten vermieden, wie sie bei der Herstellung der entsprechenden Trommeln des Standes der Technik üblich sind. Besonders wirtschaftlich ist die Herstellung aus einem einzigen Blechstück im Drückverfahren.

Die Behandlungskammer ist vorzugsweise derart ausgebildet, daß sie einen Antrieb aufweist, der mit einer Steuerung zur Zu und Abführung von Behandlungsmitteln sowie zur Drehung der Halteeinrichtung verbunden ist, welche bis zur für den jeweiligen Behandlungsschritt ausreichenden Benetzung der Proben erfolgt.

Da eine Öffnung der Türe zum Verschließen der Zugangsöffnung bei sich drehender Halteeinrichtung doch zum Austritt von Behandlungsmitteln führen könnte, ist es zweckmäßig, wenn die Steuerung derart ausgebildet ist, daß sie die Türe nur dann freigibt, wenn der Antrieb für die Halteeinrichtung stillsteht.

Behandlungskammern müssen bezüglich der Bearbeitung mit einigen Behandlungsmitteln mit einem Explosionsschutz ausgestattet sein. Dazu schreibt die Europäische Norm EN 600 79-10 eine Kapselung des gefährdeten Bereichs vor. Zu diesem Zweck wird vorgeschlagen, daß eine explosionsgeschützte Ummantelung die Halteeinrichtung umgibt. Dadurch wird die Ummantelung relativ klein gehalten und braucht nicht einen Großteil des Geräts oder das gesamte Gerät zu umfassen. Damit es zu keiner Unterbrechung dieser Kapselung kommt, wird vorgeschlagen, daß der Antrieb mittels einer Magnetmitnahme durch die explosionsgeschützte Ummantelung hindurch auf die Halteeinrichtung wirkt. Selbstverständlich muß dann eine drehbare Lagerung der Halteeinrichtung in der explosionsgeschützten Ummantelung vorgesehen sein.

Die Erfindung wird nachfolgend anhand von in der Zeichnung dargestellten Ausführungsbeispielen erläutert. Es zeigen
- **Fig. 1**: ein erstes Ausführungsbeispiel der Erfindung,
- **Fig. 2**: die Einordnung einer Behandlungskammer in die Gesamtvorrichtung zur Behandlung histologischer Proben,
- **Fig. 3**: ein weiteres Ausführungsbeispiel der Erfindung,
- **Fig. 4**: dieses weitere Ausführungsbeispiel im Schnitt und
- **Fig. 5**: eine Prinzipdarstellung eines Ausführungsbeispiels mit einer explosionsgeschützten Ummantelung.

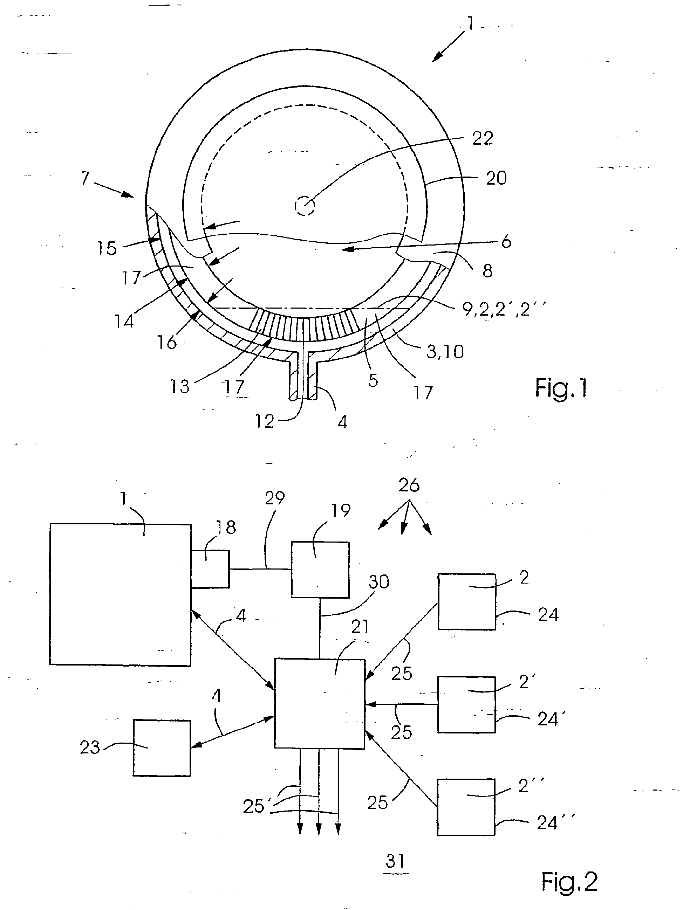

Fig. 1 zeigt ein erstes Ausführungsbeispiel der Erfindung, bei dem die Behandlungskammer 1 ein Gehäuse 3 aufweist, das als Zylinder 10 ausgebildet ist. Dieser Zylinder 10 liegt waagerecht mit der untersten Mantellinie 12 als tiefster Punkt. Dort befindet sich auch die Zu- und Abführung 4 für Behandlungsmittel 2, 2', 2". In dem Gehäuse 3 befindet sich eine Halteeinrichtung 5 für die Aufnahme von Proben, die derart zylinderförmig ausgebildet ist, daß Behältnisse 17 für Kassetten 13, welche die Proben tragen, sich entlang der inneren Wandung des Gehäuses 3 erstrecken. Vorzugsweise sind die Kassetten 13 dabei in einer Lage angeordnet, so daß ein relativ niedriger Flüssigkeitsspiegel 9 (strichpunktierte Linie) eines Behandlungsmittels 2, 2' oder 2" ausreicht, alle Kassetten 13 zu benetzen, wenn die Halteeinrichtung 5 sich dreht. Für diese Drehung ist eine Achse 22 an die Halteeinrichtung 5 angeordnet und durch das Gehäuse 3 zu einem Antrieb 18 hindurchgeführt. Die Kassetten 13 sind zur besseren Übersichtlichkeit nur beim untersten Behältnis 17 eingezeichnet.

An der Stirnseite 7 der Behandlungskammer 1 ist eine Zugangsöffnung 6 vorgesehen, welche mittels einer Türe 20 verschließbar ist. Damit die Behandlungsflüssigkeit 2, 2' oder 2" auch bei vollständiger Füllung bis zum Flüssigkeitsspiegel 9 nicht austreten kann, wenn die Türe 20 geöffnet wird, ist ein Rand 8 vorgesehen, der eine Breite 15 aufweist, die größer ist als die Dicke 14 der Probenanordnung auf der Halteeinrichtung 5 und des Spiels 16 der Halteeinrichtung 5 zur Innenwandung des Gehäuses 3. Auf diese Weise kann die Türe 20 bei Stillstand des Antriebs 18 immer geöffnet werden, auch wenn die Behandlungsflüssigkeit 2, 2' oder 2" bis zum Flüssigkeitsspiegel 9 steht. Der Rand 8 ist jedoch ebenso wie ein Teil der Türe 20 in unteren Bereich weggebrochen, um das Innenleben der Behandlungskammer 1 sichtbar zu machen.

Fig. 2 zeigt die Einordnung einer Behandlungskammer der erfindungsgemäßen Art in die Gesamtvorrichtung 31 zur Behandlung histologischer Proben. Diese kann außer der einen Behandlungskammer 1 oder auch noch weiteren Behandlungskammern 23 dienen. Beispielsweise kann eine solche weitere Behandlungskammer 23 kleiner ausgebildet sein, um Kurzbehandlungen geringer Mengen durchzuführen. Die Gesamtvorrichtung 31 weist eine Steuerung 19 auf, die über eine Verbindungsleitung 29 den Antrieb 18 betätigt und über eine Verbindungsleitung 30 eine Einrichtung 26 zur Zu- und Abführung von Behandlungsmittel 2, 2', 2". Zu diesem Zweck ist eine Ventileinheit 21 angeordnet, welche über Zuführungen 25 Behandlungsmittel 2, 2', 2" erhält. Dies kann in Vorratsbehältern 24, 24', 24" gespeichert sein. Die Anzahl der Behandlungsmittel 2, 2', 2" ist nur beispielhaft dargestellt, sie kann selbstverständlich größer sein, je nach dem wie viele Behandlungen durchzuführen sind. Die Ventileinheit 21 ist mit der Zu- und Abführung 4 der Behandlungskammer 1 oder auch einer weiteren Behandlungskammer 23 verbunden und dient der Zu- und Ableitung von Behandlungsmittel 2, 2' oder 2". Entsorgungsleitungen 25' dienen der Abführung von verbrauchtem Behandlungsmittel, das vorzugsweise getrennt abgeführt wird, um ein Recycling durchführen zu können.

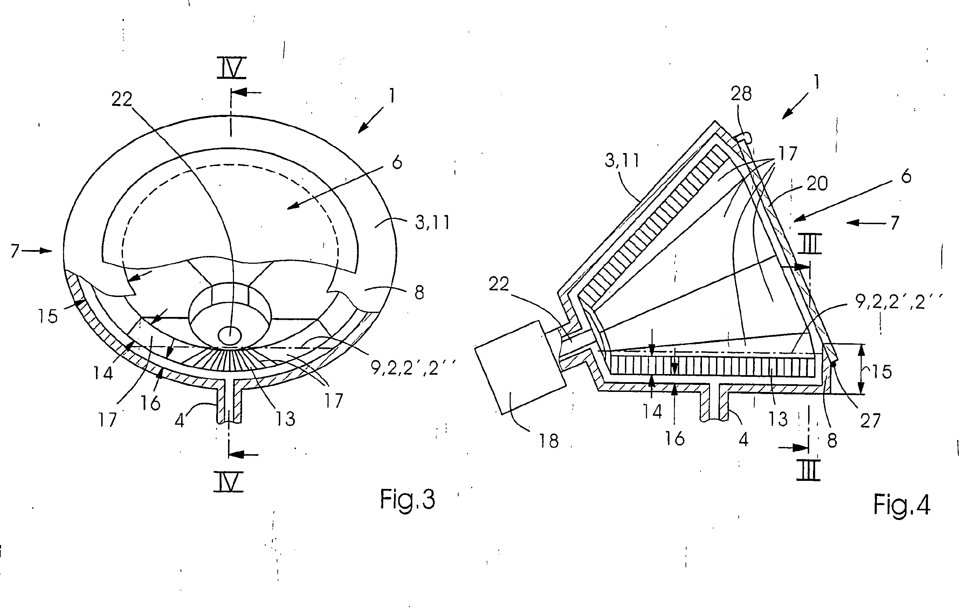

Fig. 3 zeigt ein weiteres Ausführungsbeispiel der Erfindung mit einem Gehäuse 3, das die Form eines Kegelstumpfes 11 aufweist. Zur Sichtbarmachung der Halteeinrichtung 5 für die Aufnahme von Behältnissen 17 für Kassetten 13, auf denen die Proben angeordnet sind, ist der untere Bereich der Stirnseite 7 weggebrochen dargestellt. Zur Verdeutlichung der Ausgestaltung ist in Fig. 4 ein Schnitt dargestellt, der in Fig. 3 mit N-IV eingezeichnet ist. Der Teilschnitt der **Fig. 3** ist wiederum in Fig. 4 mit III-III eingezeichnet.

Wie aus den beiden Darstellungen ersichtlich ist, weist sowohl das Gehäuse 3 als auch die Halteeinrichtung 5 eine Kegelstumpfform auf. Letztere erstreckt sich mit einem Spiel 16 entlang der inneren Wandung des Gehäuses 3, 11. Das als Kegelstumpf 11 ausgebildete Gehäuse 3 ist derart angeordnet, daß es mit einer Mantellinie waagerecht liegt. Dort ist auch die Zu- und Abführung 4 für das Behandlungsmittel 2, 2', 2" angeordnet. Auch bei dieser Ausgestaltung des Gehäuses 3 als Kegelstumpf 11 reicht ein relativ tiefliegender Flüssigkeitsspiegel 9 aus, um bei einer Drehung der Halteeinrichtung 5 alle Proben zu benetzen. Es ist bei dieser Ausgestaltung der Behandlungskammer 1 ebenfalls ein Rand 8 angeordnet, der einer Breite 15 aufweist, die der Dicke 14 der Probenanordnung zuzüglich des Spiels 16 übersteigt. Auf diese Weise kann auch hier bei vollständiger Füllung mit Behandlungsmittel 2, 2' oder 2" bis zum Flüssigkeitsspiegel 9 die Türe 20 geöffnet werden, ohne daß ein Behandlungsmittel 2, 2' oder 2" austreten kann. Dazu sollte jedoch der Antrieb 18 stillstehen, der an der kleinen Kreisfläche des Kegelstumpfes 11 angeordnet und mit einer Achse 22 mit der Halteeinrichtung 5 verbunden ist.

Bei dieser Ausgestaltung sind die Behältnisse 17 für die Aufnahme der Kassetten 13 kegelmantelartig auf der Halteeinrichtung 5 angeordnet, wodurch sich als Form für die Behältnisse 17 im wesentlichen Trapeze ergeben. Auch hier ist es zweckmäßig, wenn nur eine Lage von Kassetten 13 angeordnet ist, um mit einem niedrigen Flüssigkeitsspiegel 9 eine sparsame Verwendung von Behandlungsmittel 2, 2', 2" zu garantieren. Die Türe 20 kann mittels eines Scharniers 27 geöffnet und mittels einer Verriegelung 28 sicher verschlossen werden. Letztere kann mittels der Steuerung 19 blockiert werden, wenn sich der Antrieb 18 und damit die Halteeinrichtung 5 noch dreht, um ein Heräüsschleudern von Behandlungsmittel 2, 2' oder 2" bei einer Öffnung während des Betriebs zu verhindern.

Diese Ausgestaltung der Erfindung hat den Vorteil, daß durch die kegelstumpfartige Ausgestaltung des Gehäuses 3, 11 eine sehr große Zugangsöffnung 6 vorgesehen werden kann, die außerdem für einen Zugang eine ergonomisch sehr günstige Lage hat. Auf diese Weise ist die Zugangsmöglichkeit in höchstem Maße optimiert und ein schnelles Herankommen an alle Proben gewährleistet. Da sich die Türe 20 auch bei einer Füllung mit Behandlungsmittel 2, 2', 2" öffnen läßt, kann auf diese Weise ständig ein Herausnehmen oder Hinzufügen von Proben erfolgen.

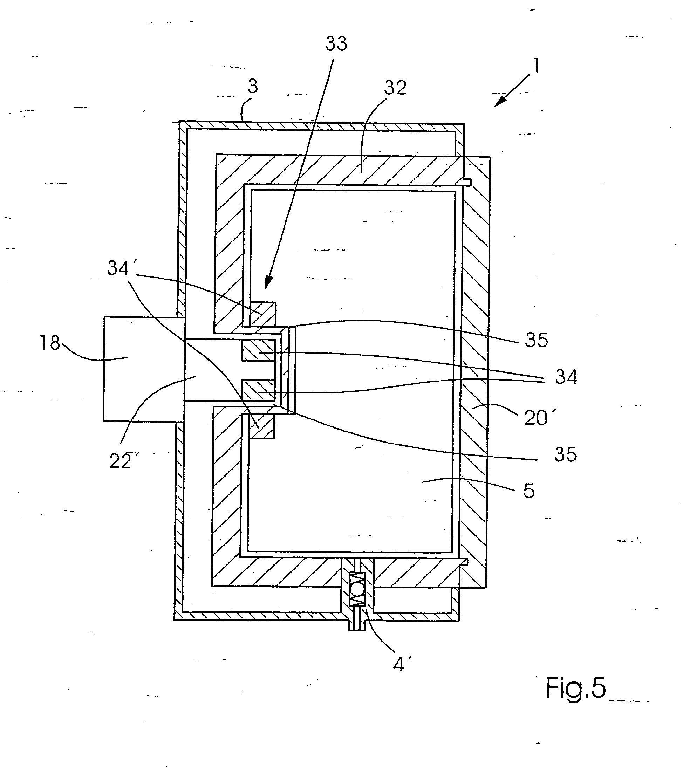

Fig. 5 zeigt eine Prinzipdarstellung eines Ausführungsbeispiels mit einer explosionsgeschützten Ummantelung 32. Diese ist im Gehäuse 3 gelagert und umgibt als vollständige Kapselung die Halteeinrichtung 5. Das Gehäuse 3 ist symbolisch eingezeichnet, es wird in der Regel weitere Geräteteile (siehe Fig. 2) umfassen. Da die Ummantelung 32 keine Unterbrechung aufweisen soll, ist der Antrieb 18 mit einer Achse 22' ausgestattet, die an ihrer Vorderseite Magnete 34 aufweist, welche durch die Ummantelung 32 hindurch die Halteeinrichtung 5 mitnehmen, da diese dort ebenfalls mit Magneten 34' ausgestattet ist. Die Halteeinrichtung 5 weist eine Lagerung 35 auf, die beispielsweise im Bereich dieser Magnetmitnahme 33 angeordnet sein kann. Die explosionsgeschützte Ummantelung 32 muß dann auch eine explosionsgeschützte Türe 20' sowie eine explosionsgeschützte Zu- und Abführung 4' für Behandlungsmittel 2, 2', 2" aufweisen.

Die Darstellungen sind selbstverständlich lediglich beispielhaft; denkbar sind Behandlungskammern 1 mit verschiedensten rotationssymmetrischen Formen. Auch die Halteeinrichtung 5, die lediglich durch die Anordnung der Behältnisse 17 symbolisch dargestellt ist, kann auf verschiedenste Weise ausgestaltet sein. Denkbar sind Gitterkörbe oder entsprechend der jeweiligen Form der Gehäuse 3 geformte Lochblechkörbe mit Aufnahmen für die Halterung der Behältnisse 17. Sternförmige Ausgestaltungen zur Einhängung von Behältnissen 17 an den Enden von Armen sind ebenfalls denkbar.

### Behandlungskammer für die Behandlung von histologischen Proben

### Bezugszeichenliste

| | |
|---|---|
| 1 | Behandlungskammer |
| 2, 2', 2" | Behandlungsmittel |
| 3 | Gehäuse |
| 4, 4' | Zu- und Abführung für Behandlungsmittel |
| 5 | Halteeinrichtung für die Aufnahme von Proben |
| 6 | Zugangsöffnung |
| 7 | Stirnseite der Behandlungskammer |
| 8 | Rand |
| 9 | Flüssigkeitsspiegel |
| 10 | Zylinder (Gehäuse) |
| 11 | Kegelstumpf (Gehäuse) |
| 12 | unterste Mantellinie |
| 13 | Kassetten für Proben |
| 14 | Dicke der Probenanordnung |
| 15 | Breite des Randes |
| 16 | Spiel |
| 17 | Behältnisse für Kassetten |
| 18 | Antrieb |
| 19 | Steuerung |
| 20, 20' | Türe zum Verschließen der Zugangs öffnung |
| 21 | Ventileinheit |
| 22, 22' | Achse der Halteeinrichtung |
| 23 | weitere Behandlungskammer |
| 24, 24', 24" | Vorratsbehälter für Behandlungsmittel |
| 25, 25' | Leitungen für Behandlungsmittel |
| 25 | Zuführung zur Ventileinheit |
| 25' | Entsorgung |
| 26 | Einrichtung zur Zu- und Abführung von Behandlungsmitteln |
| 27 | Scharnier |
| 28 | Verriegelung |
| 29 | Verbindungsleitung der Steuerung zum Antrieb |
| 30 | Verbindungsleitung der Steuerung zur Ventileinheit |
| 31 | Gesamtvorrichtung zur Behandlung histologischer Proben |
| 32 | explosionsgeschützte Ummantelung |
| 33 | Magnetmitnahme |
| 34, 34' | Magnete |
| 35 | Lagerung |

## Patentansprüche

1. Behandlungskammer (1) für die Behandlung von histologischen Proben mit Behandlungsmitteln (2, 2', 2"), wobei die Behandlungskammer (1) ein Gehäuse (3) mit einer Zu- und Abführung (4, 4') für Behandlungsmittel (2, 2', 2 "), eine in dem Gehäuse (3) angeordnete, drehbare Halteeinrichtung (5) für die Aufnahme der Proben und eine verschließbare Zugangsöffnung (6) an der Stirnseite (7) aufweist, wobei das Gehäuse (3) derart ausgebildet und gelagert ist sowie mindestens im unteren Bereich der Stirnseite (7) einen derartigen Rand (8) aufweist, dass sich auch bei geöffneter Zugangsöffnung (6) ein Flüssigkeitsspiegel (9) von Behandlungsmitteln (2, 2' oder 2") bilden kann, und wobei die Halteeinrichtung (5) eine Probenanordnung aufweist, die sich bei einer Drehung der Halteeinrichtung (5) durch das den Flüssigkeitsspiegel (9) bildende Behandlungsmittel (2, 2' oder 2") bewegen kann, **dadurch gekennzeichnet, daß** der Rand (8) eine Breite (15) aufweist, die größer ist als die Dicke (14) der Probenanordnung und des Spiels (16) der Haltevorrichtung (5) zur Innenwandung des Gehäuses (3).

2. Behandlungskammer nach Anspruch 1,
**dadurch gekennzeichnet,**
**daß** das Gehäuse (3) als waagerecht liegender Zylinder (10) und die Halteeinrichtung (5) derart ausgebildet sind, daß sie die Proben auf Kreisbahnen entlang der inneren Zylinderwandung führt, wobei der Rand (8) die Proben, die sich am tiefsten Punkt einer Kreisbahn befinden, überragt.

3. Behandlungskammer nach Anspruch 1,
**dadurch gekennzeichnet,**
**daß** das Gehäuse (3) als Kegelstumpf (11) ausgebildet ist, der derart gelagert ist, daß die unterste Mantellinie (12) horizontal verläuft, daß die Halteeinrichtung (5) derart ausgebildet ist, daß sie die Proben auf Kreisbahnen entlang der inneren Kegelstumpfwandung führt, und daß der Rand (8) sich derart an der großen Kreisfläche (13) des Kegelstumpfes (11) erstreckt, daß er die Proben, die sich an den tiefsten Punkten befinden, überragt.

4. Behandlungskammer nach Anspruch 1, 2 oder 3,
**dadurch gekennzeichnet,**
**daß** in der Halteeinrichtung (5) Kassetten (13), welche die Proben enthalten, derart anordenbar sind, daß sie sich im wesentlichen entlang der gesamten Innenwand des Gehäuses (3) erstrecken und dabei mit der Halteeinrichtung (5) und deren Spiel (16) zum Gehäuse (3) eine Dicke aufweisen, die geringer als die Breite (15) des Randes (8) ist.

5. Behandlungskammer nach Anspruch 4,
**dadurch gekennzeichnet,**
**daß** nur eine Lage von Kassetten (13) vorgesehen ist.

6. Behandlungskammer nach einem der Ansprüche 1 bis 5,
**dadurch gekennzeichnet,**
**daß** die Halteeinrichtung (5) für die Aufnahme von Behältnissen (17) ausgebildet ist, in denen mehrere Kassetten (13) anordenbar sind.

7. Behandlungskammer nach einem der Ansprüche 3 bis 6,
**dadurch gekennzeichnet,**
**daß** das Gehäuse (3) durch Formung eines einzigen Blechstücks hergestellt ist.

8. Behandlungskammer nach einem der Ansprüche 3 bis 7,
**dadurch gekennzeichnet,**
**daß** auch die Halteeinrichtung (5) die Form eines Kegelstumpfes aufweist.

9. Behandlungskammer nach Anspruch 8,
**dadurch gekennzeichnet,**
**daß** die Halteeinrichtung (5) durch Formung eines einzigen Blechstücks hergestellt ist.

10. Behandlungskammer nach Anspruch 7 oder 9,
**dadurch gekennzeichnet,**
**daß** die Herstellung im Drückverfahren erfolgt.

11. Behandlungskammer nach einem der Ansprüche 1 bis 10,
**dadurch gekennzeichnet,**
**daß** sie einen Antrieb (18) aufweist, der mit einer Steuerung (19) zur Zu- und Abführung von Behandlungsmitteln (2, 2', 2") sowie zur Drehung der Halteeinrichtung (5) verbunden ist, welche bis zur für den jeweiligen Behandlungsschritt ausreichenden Benetzung der Proben erfolgt.

12. Behandlungskammer nach Anspruch 11,
**dadurch gekennzeichnet,**
**daß** die Steuerung (19) die Türe (20, 20') zum Verschließen der Zugangsöffnung (6) nur dann freigibt, wenn der Antrieb (18) für die Halteeinrichtung (5) stillsteht.

13. Behandlungskammer nach einem der Ansprüche 1 bis 12,
**dadurch gekennzeichnet,**
**daß** eine explosionsgeschützte Ummantelung (32) die Halteeinrichtung (5) umgibt.

14. Behandlungskammer nach Anspruch 13,
**dadurch gekennzeichnet,**
**daß** der Antrieb (18) mittels einer Magnetmitnahme (33) durch die explosionsgeschützte Ummantelung (32) hindurch auf die Halteeinrichtung (5) wirkt.

## Claims

1. Treatment chamber (1) for treatment of histological samples with treatment agents (2,2',2''), wherein the treatment chamber (1) comprises a housing (3) having a supply and a discharge (4,4') for treatment agent (2,2',2''), a rotatable holding means (5) being disposed in said housing (3) for holding said samples, and a closable access opening (6) on the front side (7), wherein said housing (3) has an edge (8) disposed at least in a lower region of said front side (7) and is structured and disposed such that a liquid level (9) of treatment agent (2,2' or 2'') can be formed even when said access opening (6) is opened, and wherein said holding means (5) comprises a sample arrangement being movable during rotation of said holding means (5) through said treatment agent (2,2',2'') forming said liquid level (9), **characterized in that** said edge (8) has a width (15) which is larger than the thickness (14) of said sample arrangement plus the play (16) of said holding means (5) relative to the inner wall of said housing (3).

2. Treatment chamber of claim 1, **characterized in that** said housing (3) is formed as a horizontally disposed cylinder (10) and said holding means (5) is structured and disposed to guide samples through substantially circular paths along an inner cylindrical wall, wherein said edge (8) projects past those samples which are located on a lowermost point of said circular path.

3. Treatment chamber of claim 1, **characterized in that** said housing (3) is formed as a truncated cone (11) which is disposed such that a lowermost tangent line (12) thereof extends horizontally, that said holding means (5) is structured and disposed to guide the samples through a substantially circular path along an inner truncated cone wall and that said edge (8) is disposed on a large circular surface (13) of said truncated cone (11) to project beyond those samples which are located a lowermost points of said circular path.

4. Treatment chamber of claim 1, 2 or 3, **characterized in that** cassettes (13) containing said samples are disposed in said holding means (5) such that said cassettes extend substantially along an entire inner wall of said housing (3) and together with said holding means (5) and its play (16) relative to said housing (3) have a thickness being smaller than the width (15) of said edge (8).

5. Treatment chamber of claim 4, **characterized in that** only one layer of cassettes (13) is provided.

6. Treatment chamber of one of the claims 1 to 5, **characterized in that** said holding means (5) is structured to receive containers (17) in which several cassettes (13) can be arranged.

7. Treatment chamber of one of the claims 3 to 6, **characterized in that** said housing (3) is produced through shaping of one single piece of sheet metal.

8. Treatment chamber of one of the claims 3 to 7, **characterized in that** said holding means (5) also has a shape of a truncated cone.

9. Treatment chamber of claim 8, **characterized in that** said holding means (5) is produced through shaping one single piece of sheet metal.

10. Treatment chamber of claim 7 or 9, **characterized in that** production is effected through pressing.

11. Treatment chamber of one of the claims 1 to 10, **characterized in that** the chamber further comprises a drive (18) connected to a control (19) for delivery and discharge of treatment agents (2,2',2'') and for turning said holding means (5) until the samples are sufficiently wetted for a respective treatment step.

12. Treatment chamber of claim 11, **characterized in that** said control (19) releases the doors (20, 20') for closing said access opening (6) only when said drive (18) for said holding means (5) is stopped.

13. Treatment chamber of one of the claims 1 to 12, **characterized in that** an explosion-proof jacket (32) surrounds said holding means (5).

14. Treatment chamber of claim 13, **characterized in that** said drive (18) acts on said holding means (5) through said explosion-proof jacket (32) via a magnet carrier (33).

## Revendications

1. Chambre de traitement (1) pour le traitement d'échantillons histologiques à l'aide de moyens de traitement (2, 2', 2"), la chambre de traitement (1) comportant un carter (3) doté d'une amenée et d'une évacuation (4, 4') de moyen de traitement (2, 2', 2"), un dispositif de maintien (5) pivotant disposé dans le carter (3) pour recevoir les échantillons et une ouverture d'accès (6) refermable prévue au niveau du côté avant (7), le carter (3) étant réalisé et disposé de façon à comporter, au moins dans la région inférieure du côté avant (7), un bord (8) permettant de former, lorsque l'ouverture d'accès (6) est ouverte, un miroir fluide (9) de moyens de traitement (2, 2' ou 2") et le dispositif de maintien (5) comportant un agencement d'échantillons se déplaçant lorsque le dispositif de maintien (5) tourne à travers le moyen de traitement (2, 2' ou 2") formant un miroir fluide (9), **caractérisée en ce que** le bord (8) présente une largeur (15) supérieure à l'épaisseur (14) de l'agencement d'échantillons et du jeu (16) du dispositif de maintien (5) par rapport à la paroi intérieure du carter.

2. Chambre de traitement selon la revendication 1, **caractérisée en ce que** le carter (3) prenant la forme d'un cylindre horizontal (10) et le dispositif de maintien (5) sont réalisés de façon à ce que le dispositif guide les échantillons sur des pistes circulaires placées le long de la paroi de cylindre intérieure, le bord (8) saillant au-delà des échantillons positionnés au niveau du point le plus profond d'une piste circulaire.

3. Chambre de traitement selon la revendication 1, **caractérisée en ce que** le carter (3) prend la forme d'un tronc conique (11) disposé de telle sorte que la ligne d'enveloppe inférieure (12) s'étend à l'horizontale, que le dispositif de maintien (5) est réalisé de façon à guider les échantillons sur les pistes circulaires le long de la paroi intérieure de tronc conique et que le bord (8) s'étend de telle sorte au niveau de la grande surface circulaire (13) du tronc conique (11) qu'il ressort au-delà des échantillons se trouvant au niveau des points les plus profonds.

4. Chambre de traitement selon la revendication 1, 2 ou 3, **caractérisée en ce que** des cassettes (13) contenant les échantillons dans le dispositif de maintien (5) peuvent être agencées de telle sorte qu'elles s'étendent pour l'essentiel le long de la totalité de la paroi intérieure du carter (3) est présentent une épaisseur avec le dispositif de maintien (5) et son jeu (16) par rapport au carter (3) inférieure à la largeur (15) du bord (8).

5. Chambre de traitement selon la revendication 4, **caractérisée en ce que** seule une position de cassettes (13) est prévue.

6. Chambre de traitement selon l'une quelconque des revendications 1 à 5, **caractérisée en ce que** le dispositif de maintien (5) est réalisé pour recevoir des récipients (17) dans lesquels plusieurs cassettes (13) peuvent être agencées.

7. Chambre de traitement selon l'une quelconque des revendications 3 à 6, **caractérisée en ce que** le carter (3) est fabriqué par façonnage d'une pièce de tôle unique.

8. Chambre de traitement selon l'une quelconque des revendications 3 à 7, **caractérisée en ce que** le dispositif de maintien (5) prend également la forme d'un tronc conique.

9. Chambre de traitement selon la revendication 8, **caractérisée en ce que** le dispositif de maintien (5) est fabriqué par façonnage d'une pièce de tôle unique.

10. Chambre de traitement selon la revendication 7 ou 9, **caractérisée en ce que** la fabrication utilise le procédé d'application de pression.

11. Chambre de traitement selon l'une quelconque des revendications 1 à 10, **caractérisée en ce qu'**elle comporte un entraînement (18) relié à un élément de commande (19) pilotant l'amenée et l'évacuation de moyens de traitement (2, 2', 2") ainsi que la rotation du dispositif de maintien (5), la rotation se produisant jusqu'à ce que les échantillons soient suffisamment humectés pour l'étape de traitement respective.

12. Chambre de traitement selon la revendication 11, **caractérisée en ce que** l'élément de commande (19) ne déverrouille les portes (20, 20') de fermeture de l'ouverture d'accès (6) qu'une fois l'entraînement (18) du dispositif de maintien (5) à l'arrêt.

13. Chambre de traitement selon l'une quelconque des revendications 1 à 12, **caractérisée en ce que** le dispositif de maintien (5) est entouré par une enveloppe (32) protégée contre les explosions.

14. Chambre de traitement selon la revendication 13, **caractérisée en ce que** l'entraînement (18) agit sur le dispositif de maintien (5) par le biais d'un élément d'entraînement magnétique (33) au travers de l'enveloppe (32) protégée contre les explosions.
